(19) Europäisches Patentamt
European Patent Office
Office européen des brevets

(11) Publication number: **0 148 947**
**A1**

(12) # EUROPEAN PATENT APPLICATION

published in accordance with Art. 158(3) EPC

(21) Application number: **84900874.3**

(22) Date of filing: **20.02.84**

Data of the international application taken as a basis:

(86) International application number:
**PCT/JP84/00052**

(87) International publication number:
**WO84/04611 (22.11.84 84/27)**

(51) Int. Cl.[4]: **G 06 F 3/02**
G 05 B 19/405

(30) Priority: **12.05.83 JP 83316/83**

(43) Date of publication of application:
**24.07.85 Bulletin 85/30**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **KISHI, Hajimu**
**Hino Hirayamadai jutaku 1104 6-7-8, Asahigaoka**
**Hino-shi Tokyo 191(JP)**

(72) Inventor: **SEKI, Masaki 3-15-2-406, Takaido-nishi**
**Suginami-ku**
**Tokyo 168(JP)**

(72) Inventor: **TAKEGAHARA, Takashi Janbohru Hachioji 604**
**4-1-9, Myoujin-cho**
**Hachioji-shi Tokyo 192(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **DATA INPUT METHOD.**

(57) A method of inputting a plurality of data (Xe, Ye, R, Xc, Yc) required for a predetermined processing, the method comprising the steps of: previously storing the input order of the plurality of data; displaying the names of the plurality of data on a CRT screen (104b) in the input order; feeding the data in the input order, as well as feeding a symbol (,) as a punctuation mark between the adjacent data; feeding a symbol (NL) representing the end of the data input after all the data are fed; and discriminating the fed data from each other by distinguishing the symbol as the data punctuation mark from the other symbols and by employing the data input order.

*FIG. 6*

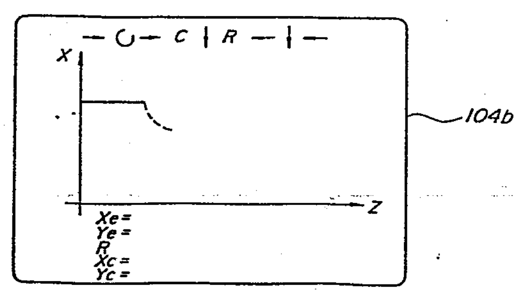


EP 0 148 947 A1

0148947

# DESCRIPTION

## DATA INPUT METHOD

### Technical Field

This invention relates to a data input method and, more particularly, to a data input method through which data can be entered quickly and simply in a case where plural items of data are to be entered.

### Background Art

In a case where data necessary for execution of processing are plural in number, the conventional conversational type data input method is so adapted that questions prompting entry of the data are displayed on a display unit prior to the execution of the processing so that an operator may enter the values of the data designations displayed. Let us assume that three items of data (referred to as A, B, C) are required to be entered in order to execute predetermined processing in the foregoing conventional data input method of conversational type. In such case, the data will be entered through the following steps:

(1) First, a question calling for the value of data A is displayed on the display screen (CRT screen) of a display unit, as shown in Fig. 1(A).

(2) The operator enters the value of the data A.

(3) Likewise, questions for data B and C are displayed, as shown in Figs. 1(B) and 1(C), in response to which the operator enters the data B, C.

If the values of data A, B, C are, say, 123, 456, 7890, respectively, then the data are entered in the data input step by operating keys 1, 2 ... , 9, 0,NL on a keyboard in the following manner:

[1] [2] [3] NL

[4] [5] [6] NL

[7] [8] [9] [0] NL

If we focus upon the exchange between the processor and the operator in the foregoing conversational data input method of the prior art, it will be seen that six operations are required between the processor and operator, namely:

(1) a request from the processor for data A (a display of a question calling for the data A is presented on the display unit);

(2) entry of the value of data A from the keyboard and acceptance of data A by the processor;

(3) a request from the processor for data B (a display of a question calling for the data B is presented on the display unit);

(4) entry of the value of data B from the keyboard and acceptance of data B by the processor;

(5) a request from the processor for data C (a display of a question calling for the data C is presented on the display unit);

(6) entry of the value of data C from the keyboard and acceptance of data C by the processor.

In the prior-art conversational data input method,

therefore, a disadvantage is that data cannot be entered in rapid fashion. Though the questions calling for all the necessary data A, B, C can also be displayed as shown in Fig. 2 in the conventional method, in such case data designations must be entered in order to identify for which data value the entered value is intended. Moreover, operating the keys is troublesome in cases where it is desired to leave data undefined.

An object of the present invention is to provide a data input method through which plural items of data can be entered rapidly and in simple fashion with but a few exchanges between the processor and the operator, and even if data is left undefined.

Disclosure of the Invention

The present invention provides a data input method for entering plural items of data necessary for predetermined processing, which method includes storing beforehand a data entry sequence for plural items of data necessary for the processing, entering the necessary data in the sequence, entering between neighboring items of data a symbol indicating a data demarcation, and distinguishing the entered data by discriminating the symbol and by using the data entry sequence. With this method, a rapid data entry is possible with but a few exchanges between the processor and operator.

Brief Description of the Drawings

Figs. 1 and 2 are views for describing a conversational data input method according to the prior art, Figs. 3(A) through (D) are views for describing an NC data creation method for a lathe, Fig. 4 is a view for describing symbolic keys, Fig. 5 is a view of a machining profile, Fig. 6 is an explanatory view showing an example of a display and is useful in describing a data input operation according to the present invention, Fig. 7 is a block diagram of an apparatus for practicing the data input method of the present invention, and Fig. 8 is a flowchart of processing.

Best Mode for Carrying Out the Invention

Automatic programming systems for lathes have come into practical use and are used to create NC tapes from a design drawing through a simple operation by entering data in a conversational mode using a graphic display screen. With such an automatic programming system, a part profile (exclusive of dimensions) can be entered merely by pressing profile symbol keys, which are located on an operator's panel, corresponding to a workpiece profile written on a design drawing. Further, according to the automatic programming system, referential information is graphically displayed on the screen from time to time and inquiries are made in ordinary language, so that dimensions and various data can be entered in response to the inquiries. When all data necessary for creation of an NC tape have been

entered, the system immediately displays the blank profile and the finished profile, begins automatic calculation of NC command data and graphically displays a tool path to create an NC tape. A programming method performed by such an automatic programming system will now be described in detail. The method comprises the following steps:

(1) drawing mode selection step;

(2) blank profile and blank dimensions input step;

(3) part profile and part profile dimensions input (profile definition) step;

(4) machine reference point and turret position input step;

(5) process selection step;

(6) tool selection step;

(7) machining area and cutting conditions designation step; and

(8) tool path calculation step.

The necessary data are entered successively to eventually create the NC tape. In the first step of selecting a drawing format, a coordinate system in line with the method of entry of the dimensions on the design drawing is selected from the information displayed on the graphic display screen. Specifically, as shown in Fig. 3, four drawings indicative of drawing format and their menu numbers 1, 2, 3, 4 appear on the screen along with an inquiry calling for selection of a

coordinate system. Keys on a keyboard are operated in response to the inquiry, and one of the keys is used to enter a menu number and, hence, select a coordinate system.

In the second step for entering a blank profile and dimensions, the blank profile, its dimensional values and the position of a base line are entered from details displayed on the graphic display screen. Specifically, since the types of blank profile for turning are broadly classified into a cylinder, hollow cylinder and special profile (special blank), the images of these blanks and their menu numbers appear on the screen, as shown in Fig. 3(B), one of the blank profiles is selected from among the displayed blank profiles by entering its menu number, then, in accordance with inquiries calling for dimensional values such as the length and thickness of the blank profile, these dimensions are entered via the keyboard. This completes the entry of the blank profile and dimensional values.

In the third step for entering part profile and dimensions, (1) coordinate axes and the blank profile, as well as a part profile inquiry, are displayed on the screen, one responds to the inquiry, while observing the design drawing, by pressing a profile symbol key on the keyboard in accordance with the profile on the design drawing, thus to enter the part profile, and (2) following the entry of the part profile, the display

screen makes an inquiry requesting the necessary dimensions, and dimensions taken from the design drawing are entered from the keyboard in response to the inquiry, thereby completing the entry of a part profile and dimensions. A machined part profile conforming to the entered part profile and dimensions will appear on the graphic display screen, as depicted in Fig. 3(C).

In the fourth step for entering machine reference point and turret position, a drawing showing the positional relationship among the part profile, turret and machine reference point is displayed together with an inquiry requesting a machine reference point and turret index position, which are necessary for creating NC data, as shown in Fig. 3(D). The prescribed numerical values are entered from the keyboard in response to the inquiry to complete the entry of machine reference point and turret index position.

In the fifth step for process selection, a prescribed machining process is selected. Specifically, when a single part is to be machined by a lathe, the machining processes available include (1) center drilling, (2) drilling, (3) rough cutting of outer diameter, (4) rough cutting of inner diameter, (5) semi-finishing of outer diameter, (7) outer diameter finishing, (8) inner diameter finishing, (9) grooving and (10) threading. One of these machining processes is selected in the fifth step. To select a

machining processing, one need only enter the name of the desired machining process, which is displayed on the display screen, by a menu number in response to an inquiry requesting which process is desired.

In the sixth step for selecting a tool, one responds to inquiries by entering the tool number of a tool to be used, a tool position compensation number, tool nose radius, virtual nose position, nose angle, etc. In the seventh step for determining machining area and cutting conditions, one responds to inquiries on the screen by entering clearance, finishing allowance, depth of cut, retraction amount, cutting speed, feedrate, etc.

In the eighth step for calculating tool path, NC data indicative of tool path are obtained by using all of the data entered in the first through seventh steps, tool trajectory is displayed on the basis of the NC data, and the NC created are delivered as an output.

In entering the part profile in (1) of the third step, the part profile is specified by successively keying in the symbolic keys (keys indicated by the symbols ↑, ↗, ⟶, ↘, ↓, ↙, ⟵, ↖, ↻, ↺, C, R), shown in Fig. 4, in accordance with the part profile elements. As an example, the part profile shown in fig. 5 is specified by pressing symbolic keys in the following sequence:

⟶, ↺, ⟶, C, ↓, R, ⟵, ↓, ⟵

The profile symbol keys become effective as numerical

value input keys automatically in dependence upon the automatic programming process steps, and it becomes possible to enter the letter of the alphabet shown at the lower right of the key tops when a shift key is pressed.

In entering dimensions in (2) of the third step, e.g., in order for the operator to enter the dimension of the circular arc element 11b after entering the dimension of a straight line element 11a shown in Fig. 5, a processor causes a display screen 104b to display the image illustrated in Fig. 6. Specifically, the display screen displays the group of symbols which specify the part profile, the first straight line element 11a, and inquiries calling for coordinate values $X_e$, $Y_e$ of the circular arc end point $P_e$, radius R, and the coordinate values $X_c$, $Y_c$ of the center $P_c$ of the circular arc, these being necessary in order to specify the circular arc element.

We will now describe a case where the present invention is applied in entering the plural items of data ($X_e$, $Y_e$, R, $X_c$, $Y_c$).

Fig. 7 is a block diagram of an NC tape automatic creation apparatus for practicing the data input method of the present invention, and Fig. 8 is a flowchart of the associated processing.

(1) After entering the part profile by the symbolic keys, the next stage is to specify the circular arc profile 11b shown in Fig. 5. When this

stage is reached, a processor 101, which is under the control of a control program stored in a ROM 102, applies alphabetic code data indicative of the necessary data $X_e$, $Y_e$, R, $X_c$, $Y_c$, as well as the input sequence thereof, to a display unit 104. When these data and the input sequence arrive, a display controller 104a causes a CRT 104b to display, in accordance with the input sequence, the questions shown in Fig. 6.

(2) In response to the questions, the operator enters data, which specifies the circular arc profile, in accordance with the sequence being displayed. Let us assume that the coordinates of the circular arc end point $P_e$ are (0,20), that the coordinates of the center $P_c$ of the circular arc are (10,-30), and that the radius R is undefined. In such case, the operator presses the keys on a keyboard 105 in the following order:

[0] [,] [2] [0] [,] [,] [1] [0] [,] [-] [3] [0] NL

The characters and symbols entered from the keyboard 105 are encoded and stored sequentially in an input register 106. It should be noted that when dimensions are entered, the profile symbol keys (Fig. 4) on the keyboard 105 become effective for entering numerical values.

(3) When the NL key is pressed, a data transfer control section, not shown, of an interface circuit 107 successively transmits the data stored in the input

register 106 to an interface circuit 108 having an internal buffer register that stores the data.

(4) The processor 101 initializes i to 1 (1⟶i).

(5) Next, the processor 101 stores in a working memory 103 the character data registered in the buffer register of the interface circuit 108, checks each and every character and determines whether there is an NL code corresponding to the NL key.

(6) If the code is not the NL code, then the processor determines whether it is a code (referred to as a "data delimiter code") corresponding to the □ key.

(7) If the code is the data demarcation code, then a numerical value read in ahead of the data delimiter code is decoded into a binary number and the numerical value obtained by the decoding is stored in a RAM 109 at an i-th data storage address thereof. It should be noted that the processor 101 recognizes the entered numerical value as being the X coordinate value $X_e$ of the circular arc end point if the relation i=1 holds, the Y coordinate value $Y_e$ of the circular arc end point if the relation i=2 holds, the circular arc radius R if i=3 holds, the X coordinate value $X_c$ of the center of the circular arc if i=4 holds, and the Y coordinate value $Y_c$ of the center of the circular arc if i=5 holds.

(8) It is then determined whether the next character code is the data delimiter code.

(9) If the code is not the data delimiter code, then i is updated through the operation

$$i + 1 \longrightarrow i$$

and processing returns to step (5).

(10) If the data read in at step (5) is the NL code, then a numerical value obtained by converting, into a binary number, data entered ahead of the NL code is applied to the i-th data storage address of the RAM 109, upon which data input processing ends.

(11) If the character code is found to be the delimiter code in the decision process of step (8), then the operation

$$i + 1 \longrightarrow i$$

is performed, the i-th item of data is treated as being undefined, and step (9) is executed.

Industrial Applicability

In accordance with the present invention as described above, data necessary for predetermined processing are entered in the aforementioned sequence, a symbol indicative of a data demarcation is entered between neighboring items of data, and an item of entered data is distinguished by discriminating the symbol and by using the data entry sequence. Accordingly, data can be entered rapidly with but a few exchanges between the processor and operator.

Furthermore, when an (i+1)th item of data is entered, this item of data can be made undefined in simple fashion merely by pressing the data delimiter

key (the ⌐ key) once, without entering a numerical value.

Accordingly, the present invention is well-suited for application to a data input unit.

CLAIMS:

1. A data input method for entering plural items of data necessary for predetermined processing, characterized by comprising steps of storing beforehand a data entry sequence for the plural items of data necessary for said processing, entering said necessary data in said sequence, entering between neighboring items of data a symbol indicating a data delimiter , and distinguishing the entered data by discriminating said symbol and by using said data entry sequence.

2. A data input method according to claim 1, characterized by having steps of making i-th and (i+i)th ones of said symbol consecutive, and recognizing an item of data which is to be entered i-th as being undefined when said symbol has been discriminated two consecutive times.

3. A data input method according to claim 1, characterized by having a step of displaying, on a display unit in accordance with the entry sequence, designations of said data to be entered.

4. A data input method according to claim 1, characterized by having a step of entering a symbol indicating end of a data input after all of said data have been entered.

FIG. 1(A)

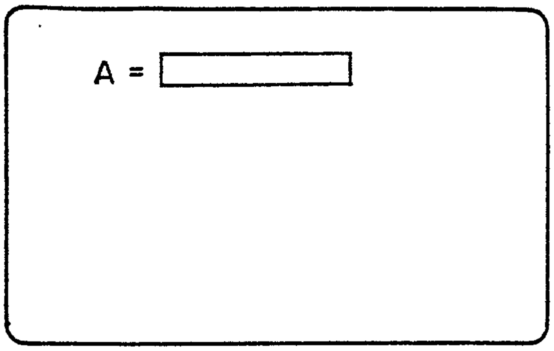


FIG. 1(B)

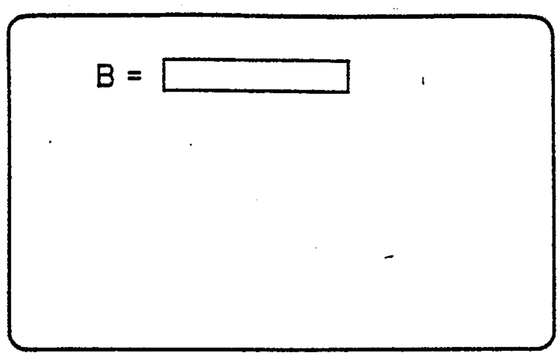


FIG. 1(C)

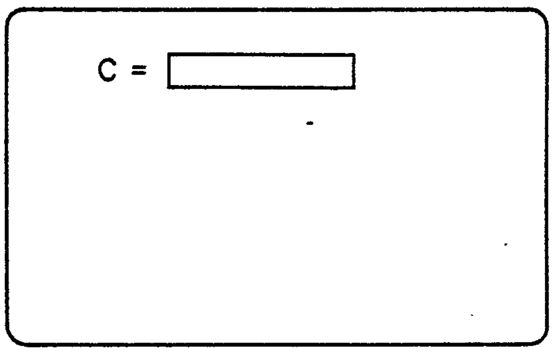


FIG. 2

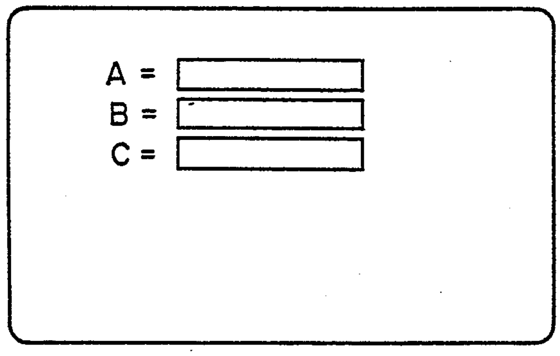


FIG. 4

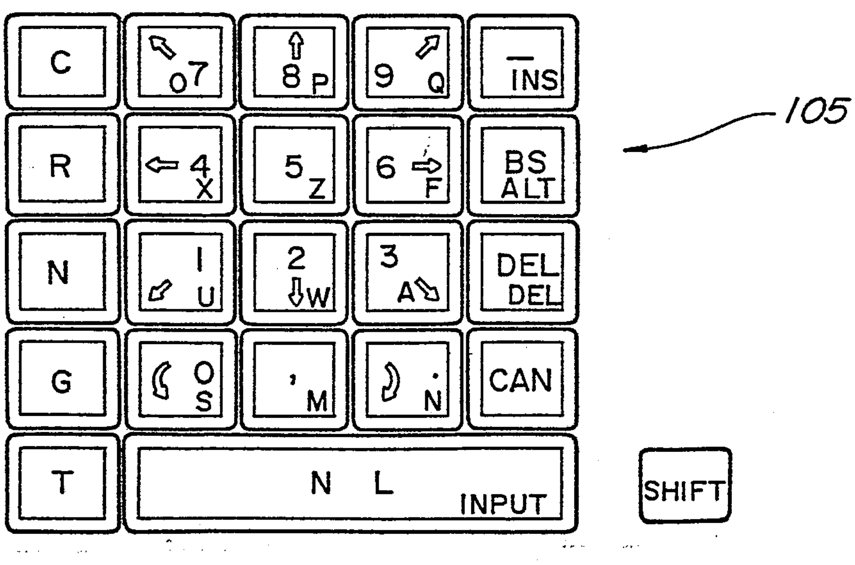

FIG. 3(A)

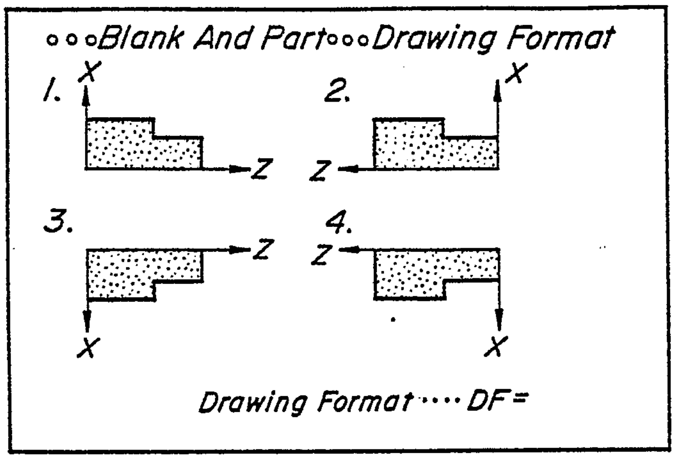


FIG. 3(B)

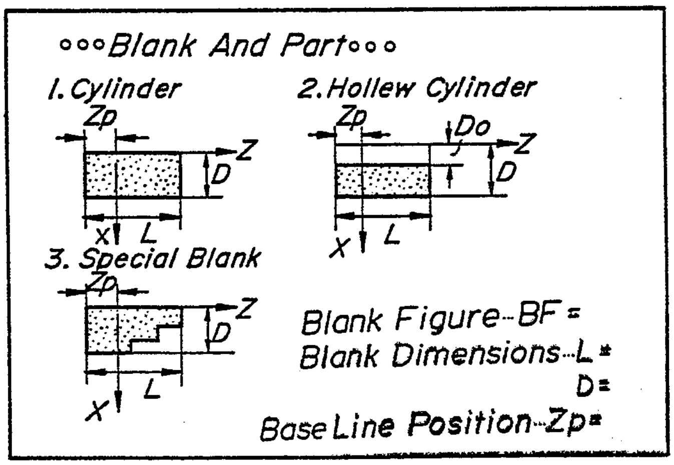


FIG. 3(C)

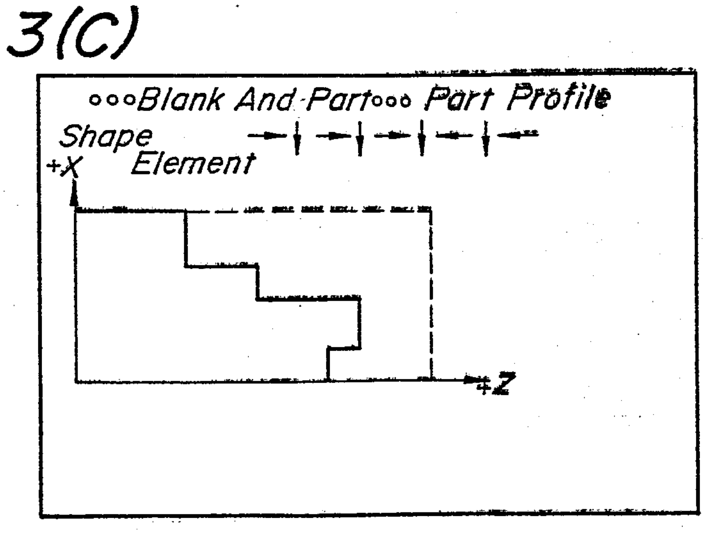

FIG. 3 (D)

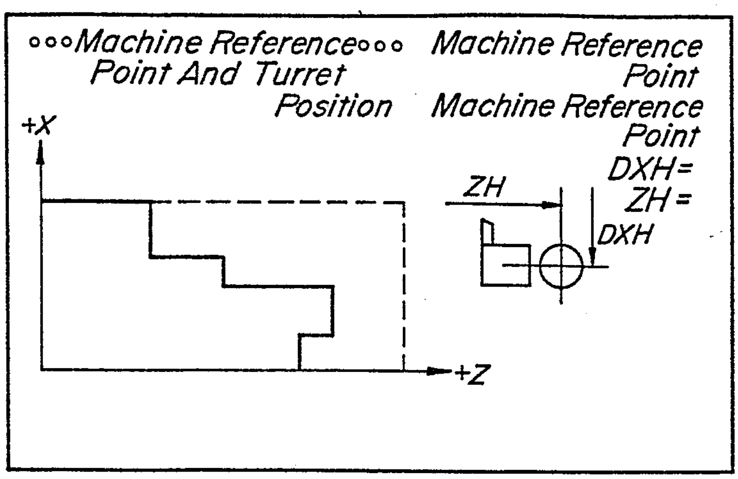


FIG. 5

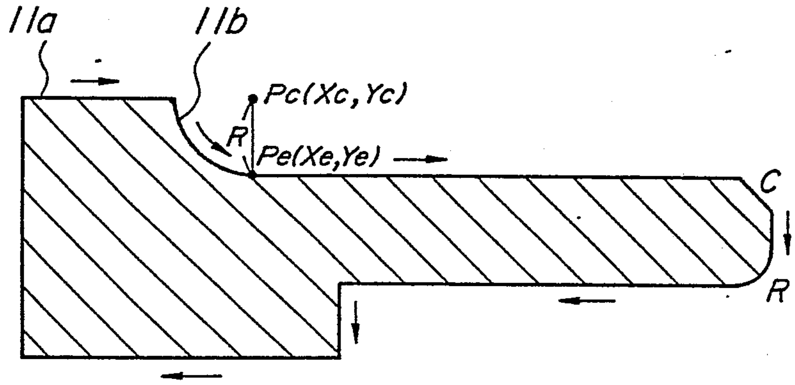


FIG. 6

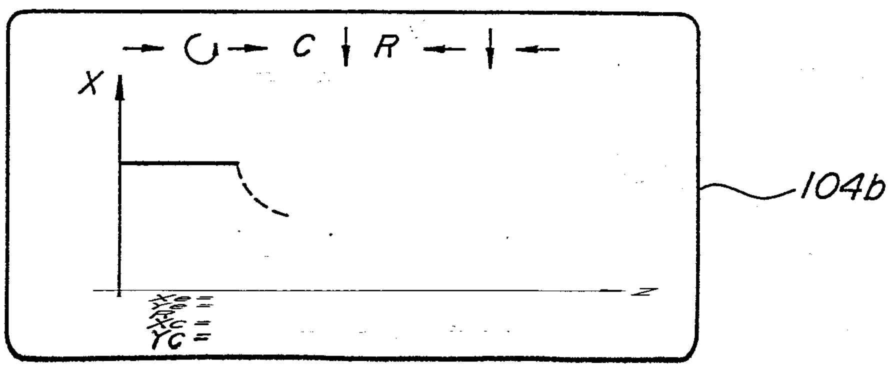

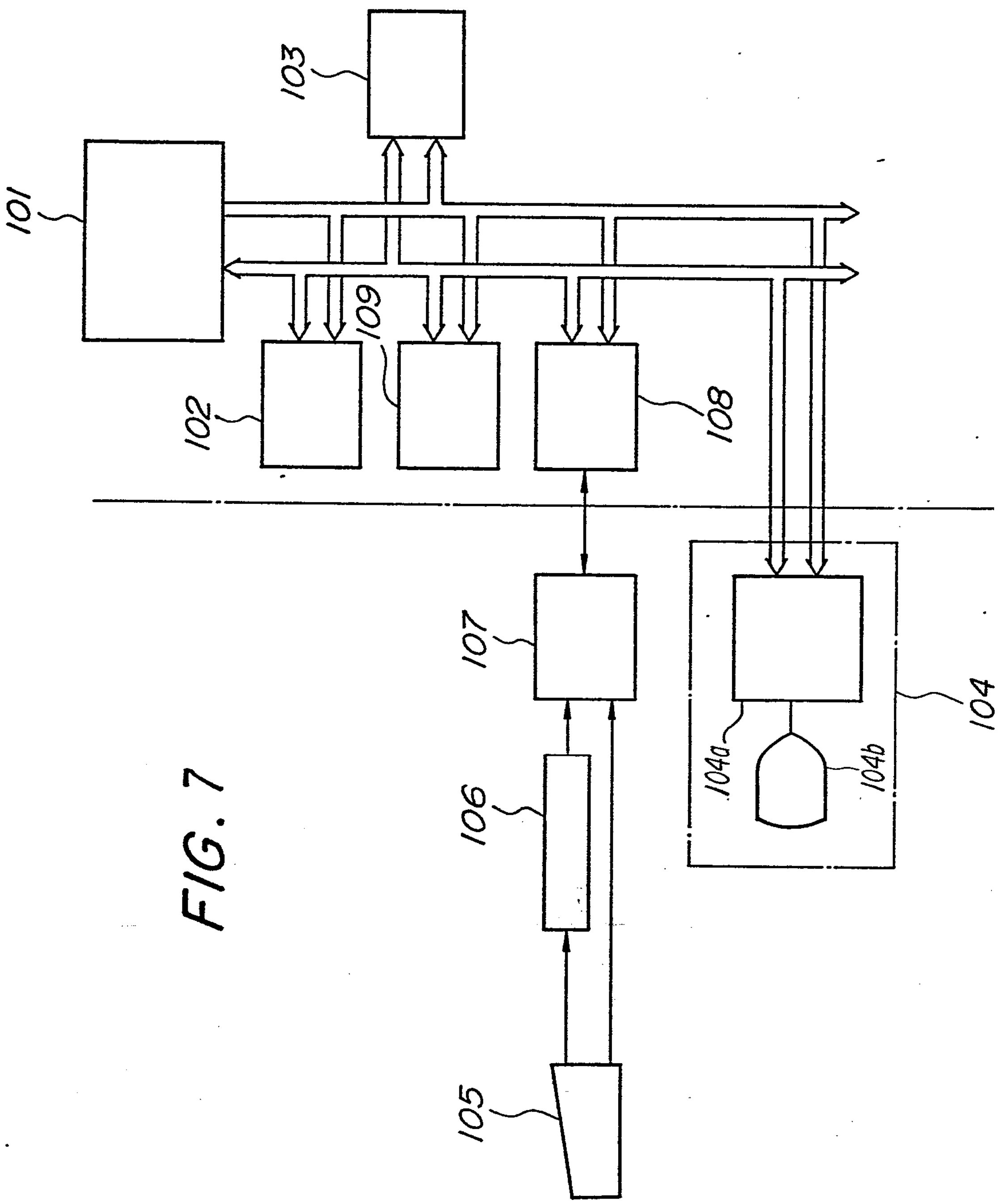


FIG. 7

FIG. 8

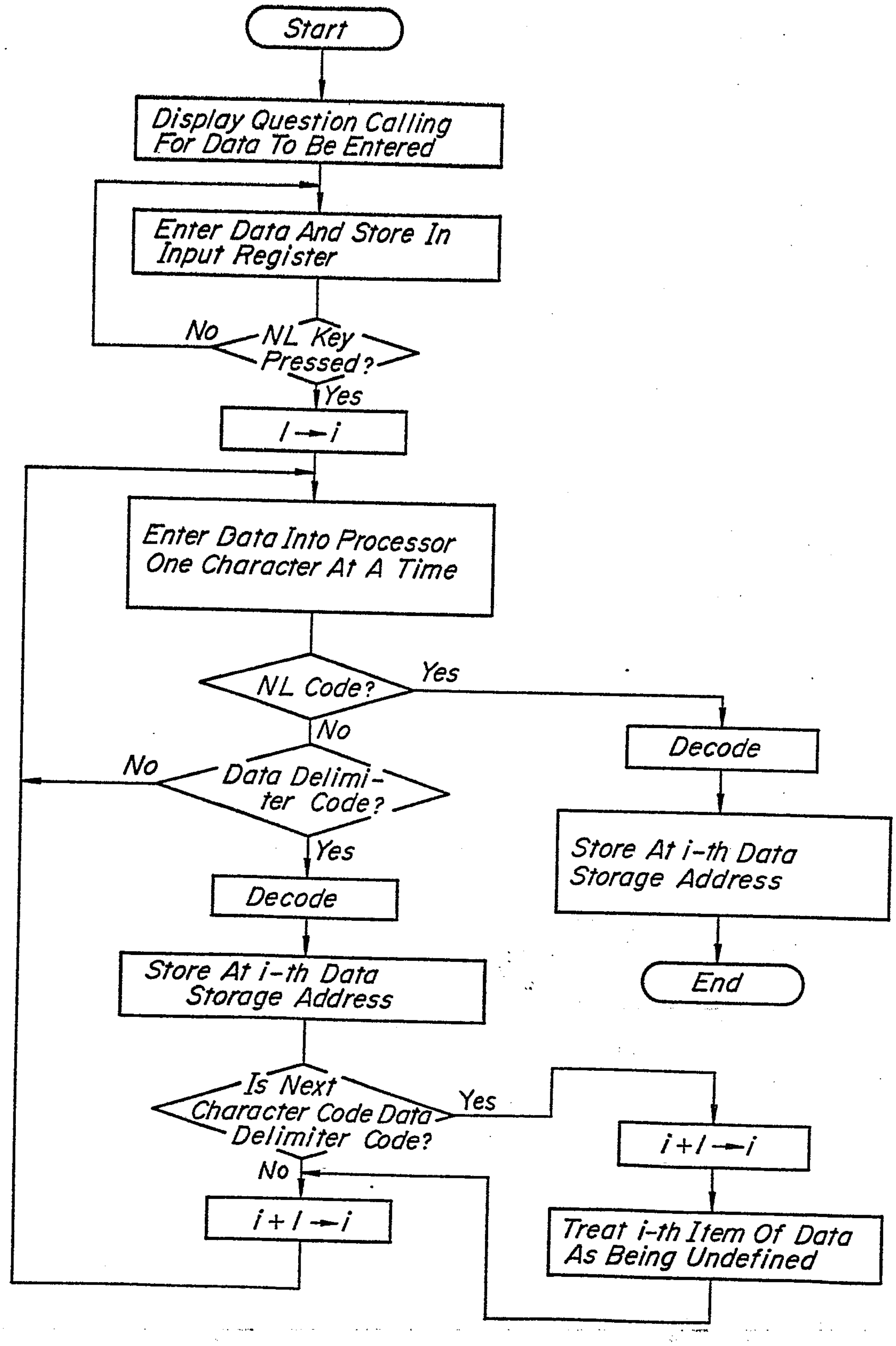
Start
Display Question Calling For Data To Be Entered
Enter Data And Store In Input Register
NL Key Pressed?
No
Yes
1 → i
Enter Data Into Processor One Character At A Time
NL Code?
Yes
No
Decode
Store At i-th Data Storage Address
End
Data Delimiter Code?
No
Yes
Decode
Store At i-th Data Storage Address
Is Next Character Code Data Delimiter Code?
Yes
No
i+1 → i
Treat i-th Item Of Data As Being Undefined
i+1 → i

# INTERNATIONAL SEARCH REPORT

0148947

International Application No PCT/JP84/00052

**I. CLASSIFICATION OF SUBJECT MATTER** (if several classification symbols apply, indicate all) [3]

According to International Patent Classification (IPC) or to both National Classification and IPC

Int. $Cl^3$ G06F 3/02, G05B 19/405

**II. FIELDS SEARCHED**

Minimum Documentation Searched [4]

| Classification System | Classification Symbols |
|---|---|
| IPC | G06F 3/02, G05B 19/403 |

Documentation Searched other than Minimum Documentation to the Extent that such Documents are Included in the Fields Searched [5]

Jitsuyo Shinan Koho 1965 - 1983
Kokai Jitsuyo Shinan Koho 1971 - 1983

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| A | JP, A, 57-48128 (Fujitsu Ltd.) 19 March 1982 (19. 03. 82) Page 2, lower column | 1 - 4 |
| A | JP, A, 57-176420 (Fujitsu Fanuc Kabushiki Kaisha) 29 October 1982 (29. 10. 82) Page 3, column 7 to 9 | 1 - 4 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| March 12, 1984 (12. 03. 84) | April 2, 1984 (02. 04. 84) |
| **International Searching Authority** [1] | **Signature of Authorized Officer** [20] |
| Japanese Patent Office | |